# EUROPEAN PATENT SPECIFICATION

(11) **EP 0 724 311 B1**
(45) Date of publication and mention of the grant of the patent: **29.03.2000**
(21) Application number: 96100315.9
(22) Date of filing: 11.01.1996
(51) Int. Cl.: H01R 13/514, H01R 13/10, B60R 16/02, H02B 1/46

(54) **Electrical distribution box**
Elektrischer Verteilerkasten
Boîtier de distribution électrique

(30) Priority: 24.01.1995 GB 9501350
(43) Date of publication of application: 31.07.1996
(73) Proprietor: THE WHITAKER CORPORATION, Wilmington, Delaware 19808 (US)
(72) Inventor: Hotea, Gheorghe, D-64347 Griesheim (DE); Listing, Martin, D-63303 Dreieich (DE); Modler, Marianne E., D-64390 Erzhausen (DE)
(74) Representative: Heinz-Schäfer, Marion

(56) References cited:
- DE-A- 3 644 425
- DE-C- 809 827
- GB-A- 2 263 022
- US-A- 5 023 752

## Description

This invention relates to an electrical distribution box, particularly where receptacles are included as part of a terminal for mating with a tab or pin type terminal.

In the prior art, there are numerous examples of electrical contact receptacles designed to mate with a tab terminal. Typically, these receptacles comprise at least one pair of oppositely disposed spring arms having contact surfaces thereupon which are adapted to come into contact with opposing sides of the tab terminal. As a tab terminal has a width that is much greater than its thickness these prior art contact receptacles limit the orientation of the tab terminal to two positions, 180° apart. There are numerous applications where it would be desirable to have a contact receptacle capable of receiving a tab terminal in a plurality of orientations, such that the tab terminal would be electrically engaged within the contact receptacle when received therein.

One particular example, is with respect to an electrical power distribution center that provides electrical interconnections between electrical and electronic devices and electrical wiring connections in a vehicular electrical system. One example of this type of electrical distribution center is presented in U.S. Patent No. 5,023,752. In this patent a pre-stamped metal circuit component includes tab terminals bent transversely thereto for interconnection with the tab terminal of electrical and electronic device, such as fuses and relays. In order to interconnect these tab terminals a double-ended female terminal is located therebetween. The particular double-ended female terminal disclosed requires the tab terminal of the circuit grid to be similarly orientated with the tab terminal from the component. This limitation controls where on the circuit grid the tab terminal must be folded from. In many instances, it may be more desirable to fold the tab terminal from a different location which would result in the tab being oriented differently than the tab terminal of the device.

An additional problem in prior art distribution boxes is the need to laminate the stamped and formed circuit grids between multiple layers of insulative plates. This makes for a difficult assembly procedure incorporating multiple components which must be sequentially stacked together. The result being a box having a large number of components.

In order to solve these problems, it would be desirable to have an electrical distribution box that could be simply assembled whereby the number of components are reduced. Furthermore, it would be desirable to have a contact receptacle capable of receiving the tab terminal of the device in a plurality of orientations, thereby eliminating the necessity of similarly aligning the tabs to be interconnected.

It is an object of this invention to provide electrical distribution boxes wherein the number of components is reduced and the assembly is simplified.

To this end, the present invention provides an electrical distribution box as defined in claim 1.

Accordingly, the box comprises first and second box portions wherein a stamped and formed circuit grid is disposed in each of the portions and retained therein such that when the portions are assembled the circuits grids are properly oriented and separated by the structure of the box portions.

It is an advantage of the distribution box that the complexity of the components, their assembly, and their interaction is greatly reduced. It is another advantage of the distribution box that the layers incorporated into each box half are reduced making them more accessible. It is yet another advantage that when adaptors capable of receiving tabs in a plurality of orientations are used in conjunction with a stamped and formed circuit grid having tabs formed therefrom, the tabs may be formed to make optimum use of the material regardless of the orientation of the mating tab.

An embodiment of the present invention will now be described by way of reference to Figure 8. Figures 1 to 7 show a terminal and a circuit grid which may be used with the distribution box according to the present invention.
Figure 1 is a partially broken away side view of an electrical terminal for interconnecting tab terminals;
Figure 2 is a top view of the contact receptacle of the electrical terminal of Figure 1;
Figure 3 is a side view of the electrical terminal of Figure 1 showing mating tab terminals oriented 90° to each other;
Figure 4 is a side view of a portion of a terminal configured to be received within the terminal receiving regions of the contact receptacle of Figure 1;
Figure 5 is an end view of the terminal of Figure 4;
Figure 6 is a top view of the contact receptacle of Figure 1 showing a cut away portion of the terminal of Figure 4 received therein;
Figure 7 is a perspective view of a circuit grid incorporating the contact receptacle of Figure 1; and,
Figure 8 is a partially cut away perspective view of the electrical distribution box according to the present invention.

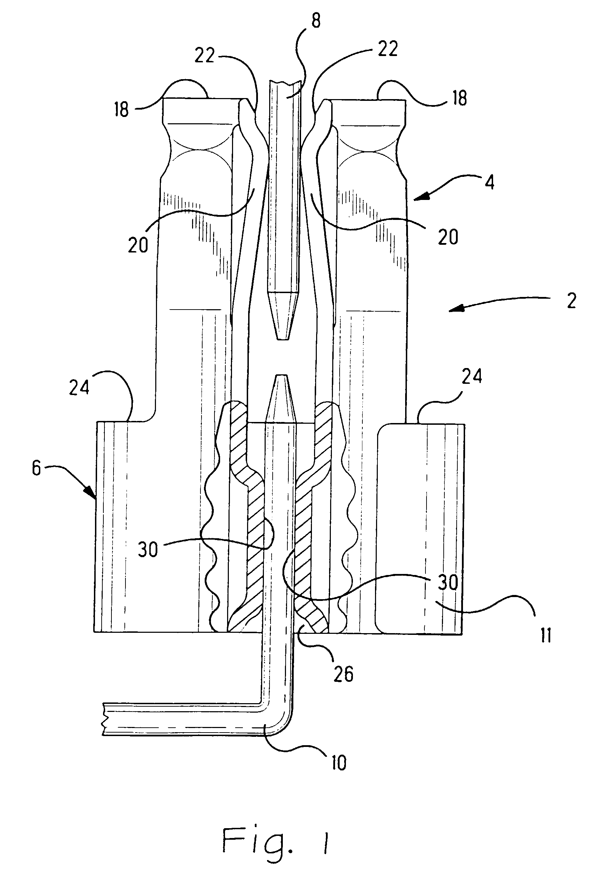

With reference first to Figure 1, an electrical terminal that functions as an adapter in a distribution box is shown at 2. The electrical terminal 2 comprises a contact receptacle 4 at one end and a conductor mating end 6 at the other end. The contact receptacle 4 is constructed to receive a tab terminal 8 in a plurality of orientations, as will be described below. The conductor mating end 6, in this embodiment, is constructed to receive a second tab terminal 10, thereby forming a terminal that functions as an adapter for interconnecting opposing male terminals 8,10. In Figure 1, the tab terminals 8,10 are shown in a similar orientation. It should be noted that the conductor mating end 6 may be configured in any number of ways. For example, an insulation displacement contact may be included for engaging an insulated conductor, a surface mountable foot or pin may be included for mating with a circuit trace of a printed circuit board, or the contact mating end 6 may be adapted to mate with other electrical connectors.

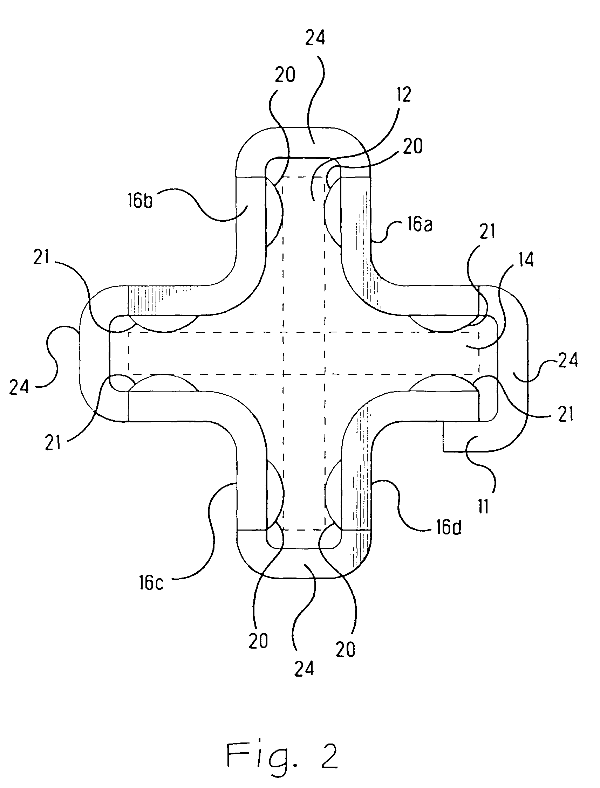

With reference now to Figure 2, the electrical terminal 2 is folded into a cross-shaped tubular member from one piece of conductive material having the desired electrical and mechanical characteristics. A tab 11 is folded over to retain the integrity of the shape. This tab 11 may be affixed where it overlaps, if necessary, by such processes as laser welding. The contact receptacle 4 defines a first terminal receiving region 12 and a second terminal receiving region 14 oriented perpendicular to each other and centrally intersecting. These terminal receiving regions 12,14 are defined by four upstanding spring members 16a, 16b, 16c and 16d each of which extend to a free end 18 opposite from the conductor mating end 6. Each of these spring arms 16a-d contain an inwardly directed terminal engaging portion 20 that corresponds to the first terminal receiving region 12 and a second inwardly directed terminal engaging portion 21 that corresponds to the second terminal receiving region 14. These portions 20,21 are constructed to make an interference fit with the terminal that is inserted therein to make electrical contact. The arms 16a-b also include an outwardly directed portion 22 at the free end 18 and corresponding to each engaging portion 20,21 form a guide for the insertion of terminal 8 into the respective terminal engaging region 12, 14 of the contact receptacle 4.

The spring arms 16a-d, are L-shaped members at the inner portion of the tubular cross shaped terminal 2 that face outward from the center of the tube which includes the terminal receiving regions 12,14 of the electrical terminal 2. The spring arms 16a-d are formed by removing a portion of the material that corresponds to the outer lobes 24 of the cross-shaped tubular terminal 2, thereby providing the independent resilience. If desired, it would be also possible to interconnect the spring arms 16a-d at free end 18 by a strap which is integrally formed with the terminal or is separate therefrom.

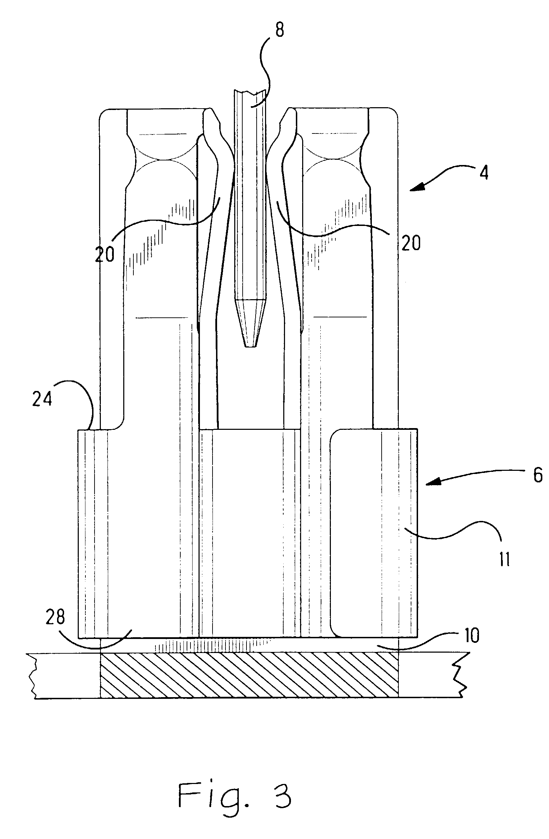

The conductor mating end 6, in this embodiment is similarly configured to the contact receptacle 4 in that it includes a pair of conductor receiving regions 26,28 that correspond to the terminal receiving regions 12,14 of the contact receptacle 4. This construction enables the second terminal 10 to also be selectively received in the various regions 26,28. This is best observed by comparing Figures 1 and 3. With reference to Figure 1, the conductor receiving regions 26,28 of the conductor mating end are formed by forming inwardly disposed surfaces 30 along the tubular walls corresponding to extensions of spring arms 16a-d, such that a conductor 10 will be received therein in an interference fit.

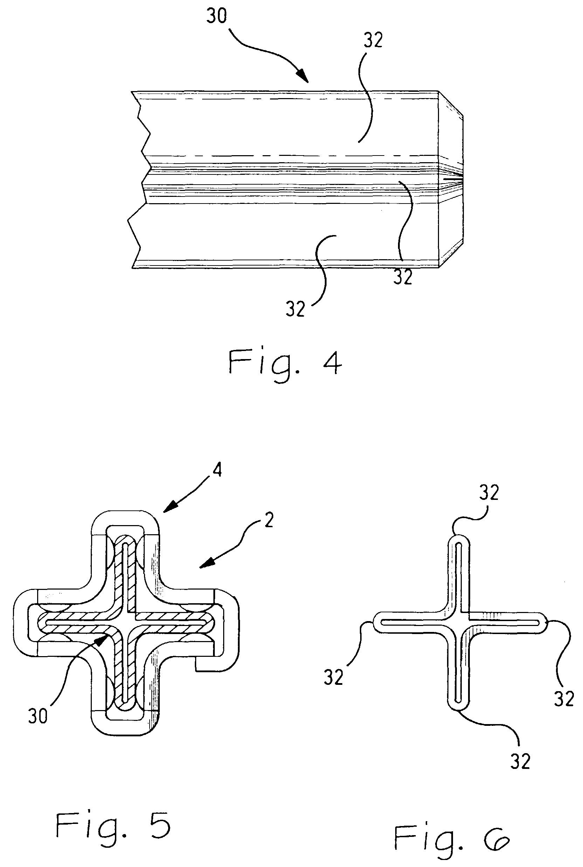

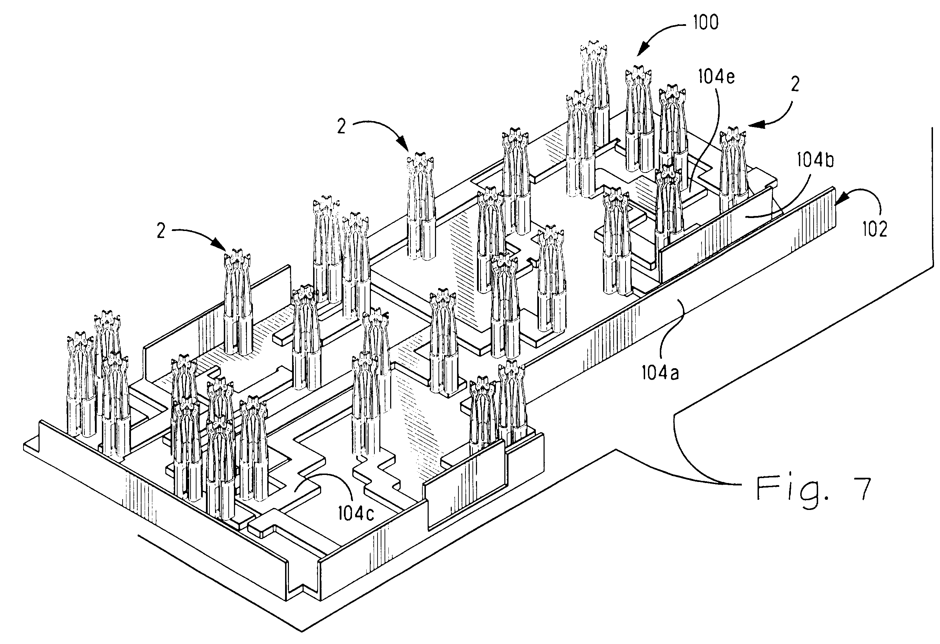

With reference now to Figure 4 and Figure 5, a mating portion 30 of an electrical terminal (not shown) is constructed to be received within both terminal receiving regions 12,14 simultaneously. The terminal 30 has a cross-shape cross-section having four outstanding ears 32 that are configured to be received within the terminal receiving regions 12,14 of the tubular terminal 2. As each of the four spring arms 16a-d include two inwardly directed surfaces 20,21 that are orthogonally opposed to each other, the cross-shaped terminal 30 will be engaged in 8 places, as shown in Figure 6. The 8 point engagement assures reliable interconnection and the transfer of current.

With reference now to Figure 7, a circuit grid assembly incorporating the receptacle terminal 2 is shown at 100. The circuit grid assembly 100 includes a circuit grid 102 having a plurality of circuit links 104a-e that have a plurality of tabs folded upward therefrom, whereupon the receptacles 2 are mounted. Some of the links 104a may include a portion folded transverse to the general place of the grid in order to conserve space, especially at the outer boundary thereof. The multiple contact receiving areas of the terminal as described above enable the tabs to be bent up where it is most desirable, such as with respect to material conservation. Furthermore the multiple tab receiving cavities at the bottom of the receptacle 2 which would receive the tab of the circuit grid 102 enable easy assembly of the receptacles as multiple positions are possible. The circuit grids 102 may be stamped and formed from a continuous sheet of material, as with a lead frame, and wound upon a continuous coil, with webs interconnecting the respective circuit links 104a-e, prior to bending the tabs outward therefrom.

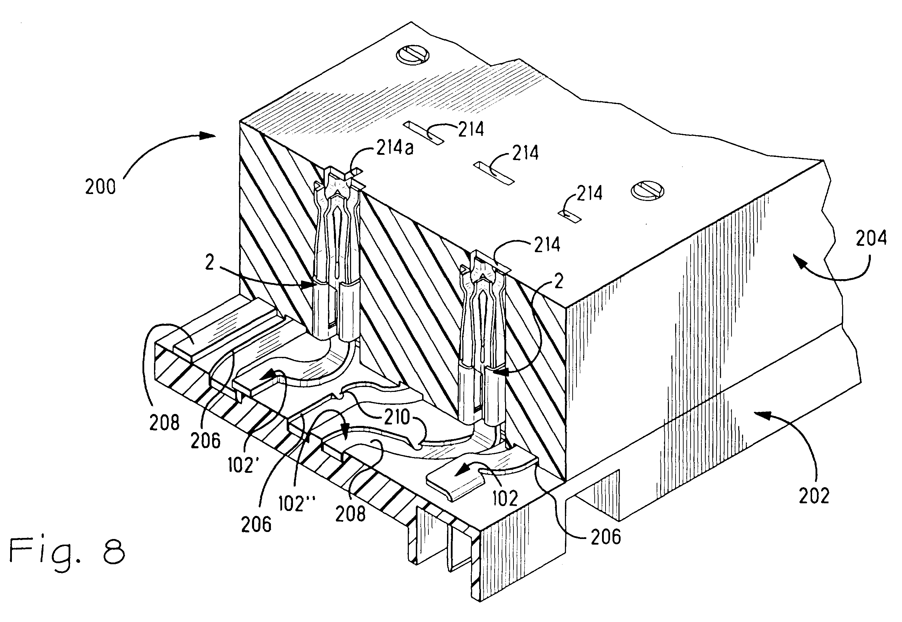

With reference now to Figure 8, an electrical distribution box incorporating a circuit grid assembly similar to that of Figure 7 is shown generally at 200. The electrical distribution box 200 includes a first outer portion 202 and a second outer portion 204. A circuit grid 102', similar to that shown in Figure 7, is mounted in the second portion 204 of the box 200; while a second circuit grid 102'' is mounted in the first portion 202 of the box 200.

The first and second portions 202,204 each include passageways 206 therein where circuit links 208 of the circuit grids 102',102'' are received. The circuit links are positively retained in the passageways 206 by such processes as heat staking, shown for example at 210 where the side 212 of the passageways 206 are melted to overlie the circuit link 208. In addition, one of the mating portions 202,204 may include posts that would sit on, or be closely disposed to, the corresponding circuit link 208 located in a passageway 206 of the mating portion 204,202 so that the link 206 is captured therein and may not be displaced therefrom.

The second mating portion 204 includes a plurality of tab receiving openings 214 for receiving a tab of a mating component (not shown), such as a fuse or relay. As can be seen with reference to opening 214a the mating tab will be received 90 degrees to a tab 216 of the circuit grid 102'. The receptacle 2 provides the flexibility necessary to enable the tab 216 to be bent from where material exists and not be limited by the needed end orientation.

The distribution box 200 is assembled by first forming the first and second housing portions 202,204 and the desired circuit grids. The circuit grids 102',102'' could be stored upon the coils as described above. The circuit grids 102',102'' are then presented at the respective first or second portions 202,204 and placed therein. The tabs could have been bent outward from the grid 102',102'' prior to placing the circuit links 208 of the grid within their respective passageways 206 of the proper portion. The links 208 may then be retained in the passageways 206 by such process as heat staking. If the circuit grids 102'102'' were inserted with the circuit links interconnected by webs, the webs can be sheared thereby separating the links. If desired, the receptacle terminals may then be set upon the tabs. Finally, with the circuit grids 102',102'' now positioned and retained in their respective portions 202,204, the portions may be mated together in sandwich manner, whereby the electrical distribution box is formed.

Advantageously then, an electrical distribution box is produced that incorporates multiple circuit grids in a simple and easy to assemble manner as positioning of the grids is dependent upon aligning of the housings rather than having to position a subassembly of grids and insulation plates within a housing.

## Claims

1. An electrical distribution box (200) comprising a box having a first outer portion (202) and a second outer portion (204) that include multiple stamped and formed circuit grids (102',102'') therein characterized in that at least one of the stamped and formed circuit grids (102'') is positioned and retained in the first portion (202) and at least one of the stamped and formed circuit grids (102') is retained in the second portion (204).

2. The electrical distribution box (200) of claim 1 wherein one of the circuit grids (102',102'') includes receptacle contacts (2) configured to accept a mating tab in more than one orientation.

3. The electrical distribution box (200) of claim 1 wherein one of the circuit grids (102') includes tabs extending in opposite directions relative the grid for interconnection on opposite sides of the box (200).

4. The electrical distribution box of claim 1 wherein one of the first and second outer portions (202,204) includes channels (206) wherein links (208) of the circuit grids (102',102'') are disposed.

5. The electrical distribution box of claim 4, wherein the links (208) are retained in the channels (206) of the corresponding outer portion (202,204) by deforming a portion (210) of outer portion (202,204) into interference with the link (208).

6. The electrical distribution box of claim 1 wherein the outer portions (202,204) form the electrical distribution box.

## Patentansprüche

1. Elektrischer Verteilerkasten (200), der einen Kasten aufweist, der aufweist: einen ersten äußeren Abschnitt (202); und einen zweiten äußeren Abschnitt (204), die mehrere gestanzte und geformte Schaltkreisgitter (102', 102") darin umfassen, dadurch gekennzeichnet, daß mindestens eines der gestanzten und geformten Schaltkreisgitter (102") im ersten Abschnitt (202) positioniert und gehalten wird und mindestens eines der gestanzten und geformten Schaltkreisgitter (102') im zweiten Abschnitt (204) gehalten wird.

2. Elektrischer Verteilerkasten (200) nach Anspruch 1, bei dem eines der Schaltkreisgitter (102', 102") Buchsenkontakte (2) umfaßt, die so ausgeführt sind, daß sie eine passende Nase in mehr als einer Ausrichtung aufnehmen.

3. Elektrischer Verteilerkasten (200) nach Anspruch 1, bei dem eines der Schaltkreisgitter (102') Nasen umfaßt, die sich in entgegengesetzten Richtungen relativ zum Gitter für eine Verbindung auf gegenüberliegenden Seiten des Kastens (200) erstrecken.

4. Elektrischer Verteilerkasten nach Anspruch 1, bei dem einer von erstem und zweitem äußerem Abschnitt (202, 204) Kanäle (206) umfaßt, worin Glieder (208) der Schaltkreisgitter (102', 102") angeordnet sind.

5. Elektrischer Verteilerkasten nach Anspruch 4, bei dem die Glieder (208) in den Kanälen (206) des entsprechenden äußeren Abschnittes (202, 204) gehalten werden, indem ein Abschnitt (210) des äußeren Abschnittes (202, 204) in einen festen Eingriff mit dem Glied (208) verformt wird.

6. Elektrischer Verteilerkasten nach Anspruch 1, bei dem die äußeren Abschnitte (202, 204) den elektrischen Verteilerkasten bilden.

## Revendications

1. Boîtier de distribution électrique (200) comprenant un boîtier comportant une première partie externe (202) et une deuxième partie externe (204) englobant de multiples grilles de circuit estampées et formées (102', 102"), caractérisé en ce qu'au moins une des grilles de circuit estampées et formées (102") est positionnée et retenue dans la première partie (202), au moins une des grilles de circuit estampées et formées (102') étant retenue dans la deuxième partie (204).

2. Boîtier de distribution électrique (200) selon la revendication 1, dans lequel une des grilles de circuit (102', 102") englobe des contacts de prise (2) configurés de sorte à accepter une patte d'accouplement dans plus d'une orientation.

3. Boîtier de distribution électrique (200) selon la revendication 1, dans lequel une des grilles de circuit (102') englobe des pattes s'étendant dans des directions opposées par rapport à la grille en vue d'une interconnexion sur les côtés opposés du boîtier (200).

4. Boîtier de distribution électrique (200) selon la revendication 1, dans lequel une des première et deuxième parties externes (202, 204) englobe des canaux (206) dans lesquels sont agencées des liaisons (208) des grilles de circuit (102', 102").

5. Boîtier de distribution électrique selon la revendication 4, dans lequel les liaisons (208) sont retenues dans des canaux (206) de la partie externe correspondante (202, 204) par déformation d'une partie (210) de la partie externe (202, 204) pour former un ajustement serré avec la liaison (208).

6. Boîtier de distribution électrique selon la revendication 1, dans lequel les parties externes (202, 204) forment le boîtier de distribution électrique.
